# EUROPEAN PATENT SPECIFICATION

(11) **EP 4 107 340 B1**
(45) Date of publication and mention of the grant of the patent: **08.04.2026**
(21) Application number: 21706234.8
(22) Date of filing: 16.02.2021
(51) Int. Cl.: E03C 1/322, E03C 1/324, E03D 11/14

(54) **SANITARY WARE APPARATUS**
SANITÄRGEGENSTAND
APPAREIL SANITAIRE

(30) Priority: 18.02.2020 GB 202002207
(43) Date of publication of application: 28.12.2022
(73) Proprietor: Ideal Standard International NV, 1935 Zaventem (BE)
(72) Inventor: MORETTO, Alessandro, 1935 Zaventem (BE)
(74) Representative: D Young & Co LLP
(86) International application number: PCT/EP2021/053740
(87) International publication number: WO 2021/165244

(56) References cited:
- EP-B1- 2 215 313
- EP-B1- 2 351 890
- WO-A1-2009/074301

## Description

### BACKGROUND

The present invention relates particularly, but not exclusively, to a sanitary ware apparatus for mounting against a mounting surface, such as a wall.

In the above respect, existing mechanisms for mounting sanitary ware apparatus against a wall can be particularly complicated, and can require a sanitary ware apparatus having a particularly complicated main body portion - nominally comprising a number of components, which collectively can make the mounting of the sanitary ware apparatus i) complicated; ii) inaccurate; and iii) time-consuming.

Needed therefore is a sanitary ware apparatus, and a fastening mechanism for the same, which can mitigate against some of the above outlined disadvantages.

EP2351890B discloses an attachment nut and a method of its use. EP2351890B does not disclose a wall fixing portion comprising a levelling mechanism comprising a second bushing, the levelling mechanism for varying the orientation of a body portion of a sanitary ware apparatus with respect to a wall and wherein the second bushing is locatable in a channel in a plurality of different orientations..

### SUMMARY OF THE INVENTION

Aspects of the invention are set out in the accompanying claims.

Viewed from a first aspect there is provided a sanitary ware apparatus for mounting against a wall, according to claim 1, wherein the apparatus comprises a body portion comprising at least one channel for receiving a fastening mechanism for mounting the sanitary ware apparatus against a wall, wherein each channel comprises a first, open, end and a second end opposite the first end, wherein each channel is at least partially surrounded by a channel wall extending between the first end and the second end, wherein the channel wall comprises an opening extending therethrough, wherein the opening is located between the first end and the second end of the channel, and wherein the opening is for receiving a portion of the fastening mechanism.

This arrangement provides an effective mechanism for mounting the sanitary ware apparatus against a wall with a reduced number of components, and in a way that can be comparatively quick and easy to perform. Furthermore, the arrangement also allows the body portion of the sanitary ware apparatus to in principle be made as a unitary (single) component, with the fastening mechanism then fitted in and around the channel portion thereof. In the context of a sanitary ware apparatus comprising a ceramic body portion in particular, although not exclusively, being able to form the body portion as a unitary component is particularly advantageous.

In accordance with some embodiments, the first end of each channel may be located on a flat surface of the body portion, wherein the flat surface is operable to engage or face against the wall. In this way, the channel can be more easily accessed relative to the flat surface, such to allow for the fastening mechanism to be more easily received inside the channel.

In some embodiments, each channel may extend in a first direction, with the opening extending in a second direction which is different to the first direction. In some particular embodiments, the first direction may be perpendicular to the second direction. In some further particular embodiments, once the sanitary ware apparatus is mounted against a wall, the first direction may be substantially horizontal, and/or the second direction may be substantially vertical. By having the second direction be different/perpendicular to the first direction, this improves the ability of the channel to retain the fastening mechanism therein, which in turn improves the ability of the channel to secure the sanitary ware apparatus against a wall during use.

In some embodiments, the opening may be located more proximal to the second end of the channel than the opening is located to the first end of the channel. In this way, the opening is located further away from the first, open, end of the channel, which reduces the likelihood of the fastening mechanism falling out from the first end of the channel.

Each channel may, in some embodiments of the sanitary ware apparatus, form a recess within an interior surface of the sanitary ware apparatus. In this way, the channel can be more concealed from inadvertent access by unwanted foreign objects, and can simplify the construction of the body portion.

In some particular embodiments, each channel may comprise a non-circular cross section, such as, but not limited to, a rectangular cross section. In such embodiments, the particular cross-section may then better control the ability of the fastening mechanism to be inserted into channel in a predetermined number of permitted ways, such that the likelihood of incorrect insertion of the fastening mechanism into the channel can be reduced.

In accordance with some embodiments, a side of the channel between the first end and the second end may be open, such that the channel wall does not completely surround the channel. In this way, the exposed side may provide for easier manufacture of the body portion, and also allow for easier access, maintenance, and cleaning of the channel when it is not in use.

To ensure a predetermined travel length for the fastening mechanism inside the channel, and to allow for better location of the fastening mechanism inside the channel, in accordance with some embodiments the second end of each channel may be closed.

In accordance with some embodiments, which might include when the sanitary ware apparatus is a toilet, the opening may be accessible from a hole located on an external surface of the body portion. In some particular embodiments, the opening, during use of the sanitary ware apparatus when mounted against a wall, may be located on an upper surface of the sanitary ware apparatus, and/or a surface which faces the user when the sanitary ware apparatus is in use.

The sanitary ware apparatus further comprises the fastening mechanism.

The fastening mechanism comprises for each channel: i) a wall fixing portion for at least partially inserting in; and for at least partially projecting from; the wall, wherein the wall fixing portion is located in the channel; and ii) a locking member inserted through the opening of the channel, and extending through the channel wall, wherein the locking member is engaged with the wall fixing portion located in the channel.

According to the invention, the wall fixing portion comprises a first bushing which is located inside the channel, and further comprises a locking pin which extends through the first bushing, wherein the locking member extending through the channel wall extends into the first bushing and engages with the locking pin. In such embodiments, the locking member may engage the locking pin by a friction fit, such to prevent the locking pin from being removed from the first bushing. In each of these embodiments, each of the locking pin and the locking member may be elongate, wherein the elongate direction of the locking member is substantially perpendicular to the elongate direction of the locking pin. In all the above embodiments, the interaction of the locking pin with the locking member provides for a particularly effective fastening mechanism for mounting the sanitary ware apparatus against a wall (in which the wall fixing portion is at least partially inserted in).

In accordance with some embodiments of the sanitary ware apparatus, the locking member may comprise a third bushing and a fastener engaged inside the third bushing, wherein the fastener engages against the locking pin.

In such embodiments, in some particular embodiments thereof, the third bushing may be pressed into engagement with the body portion by the fastener. In this way, the engagement of third bushing with the body portion helps retain the fastening mechanism in place, such to reduce the likelihood of inadvertent/unintended unfastening of the fastening mechanism.

In respect of the wall fixing portion, the wall fixing portion comprises a second bushing which is located inside the channel, and which the body portion is configured to rest on for supporting the body portion. In this way, the bushing can provide a greater surface area on which the body portion can rest on, which may reduce the pressure exerted by the body portion on the fastening mechanism.

According to the invention, the wall fixing portion comprises a levelling mechanism for varying the orientation of the body portion with respect to the wall. In this way, the fastening mechanism might then account for small errors in orientation otherwise caused by incorrect positioning of holes inside the wall - in which the fastening mechanism might be configured to be received in. The levelling mechanism comprises the second bushing, wherein the second bushing is locatable in the channel in a plurality of different orientations. In this way, the orientation of the second bushing might then impact its position relative to the body portion, and hence impact the resting position of the body portion on the second bushing. In a very particular embodiment, the second bushing might be locatable in the channel in a plurality of different orientations by virtue of the second bushing defining a second eccentric bushing (i.e. whose through hole is offset from the centre of the bushing).

In accordance with some embodiments, the locking member comprises a threaded portion, which might in some particular embodiments be an internal thread portion, for attaching a toilet seat to the sanitary ware apparatus. In such embodiments, the attachment portion thus obviates the need for a completely different attachment mechanism for attaching any such toilet seat to the sanitary ware apparatus. In principle, this may then serve to reduce the complexity of the body portion by it not then necessarily needing a mounting point for such a completely different attachment mechanism.

In the context of the above embodiments, at least one channel may be provided. However, in some particular embodiments, the at least one channel may comprise a plurality of channels, such as but not limited to two, three or four channels. In these embodiments, each channel may then be provided with a corresponding fastening mechanism which is receivable in the channel and the opening from the channel wall.

In accordance with some embodiments of the invention, the body portion may be formed as a unitary component. In this way, the manufacture of the body portion may be simplified in so far as it is formed as a single component.

In some embodiments of the sanitary ware apparatus, the sanitary ware apparatus may be made of ceramic.

Although not limiting, possible applications of the sanitary ware apparatus include for it to be a toilet, urinal, bidet, or even a sink.

### DRAWINGS

Aspects of the invention will now be described, by way of example only, with reference to the accompanying figures in which:
Figure 1A shows a perspective rear view of a sanitary ware apparatus in the form of a toilet.
Figure 1B shows a perspective front view of the sanitary ware apparatus from Figure 1A.
Figure 1C shows a perspective partial rear view of the sanitary ware apparatus from Figure 1A.
Figure 1D shows a perspective partial rear view of the sanitary ware apparatus from Figure 1A.
Figure 2 shows various perspective views, and a cross section view, of a fastening mechanism for use with a sanitary ware apparatus and for mounting the sanitary ware apparatus against a wall.
Figures 3A and 3B show perspective views outlining a first stage for mounting a sanitary ware apparatus against a wall using a fastening mechanism.
Figures 3C and 3D show perspective views outlining a second stage for mounting the sanitary ware apparatus against the wall using the fastening mechanism.
Figures 3E and 3F show perspective views outlining a third stage for mounting the sanitary ware apparatus against the wall using the fastening mechanism.
Figures 3G and 3H show perspective views outlining a fourth stage for mounting the sanitary ware apparatus against the wall using the fastening mechanism.
Figures 3J-3L show perspective views outlining a fifth stage for mounting a seat/cover to the sanitary ware apparatus.
Figures 4A and 4B show perspective rear views of attaching a sanitary ware apparatus, in the form of a bidet, against a wall using the fastening mechanism shown in Figure 2.

While the present teachings are susceptible to various modifications and alternative forms, specific embodiments are shown by way of example in the drawings and are herein described in detail. It should be understood, however, that drawings and detailed description thereto are not intended to limit the scope to the particular form disclosed, but on the contrary, the scope is to cover all modifications, equivalents and alternatives falling within the scope defined by the appended claims.

As used in this specification, the words "comprises", "comprising", and similar words, are not to be interpreted in an exclusive or exhaustive sense. In other words, they are intended to mean "including, but not limited to".

### DESCRIPTION

The present teaching relates generally to a sanitary ware apparatus, such as (but not limited to) a toilet or bidet, for mounting against a wall.

With reference to the Figures, there is shown a sanitary ware apparatus 10 for mounting against a wall 200, wherein the apparatus 10 comprises a body portion 12 comprising at least one channel 14 for receiving a fastening mechanism 100 for mounting the sanitary ware apparatus 10 against a wall 200. Each channel 14 comprises a first, open, end 16 and a second end 18 opposite the first end 16, and each channel 14 is at least partially surrounded by a channel wall 20 extending between the first end 16 and the second end 18.

The channel wall 20 comprises an opening 22 extending therethrough, wherein the opening 22 is located between the first end 16 and the second end 18 of the channel 14, and wherein the opening 22 is for receiving a portion of the fastening mechanism 100, as will be described.

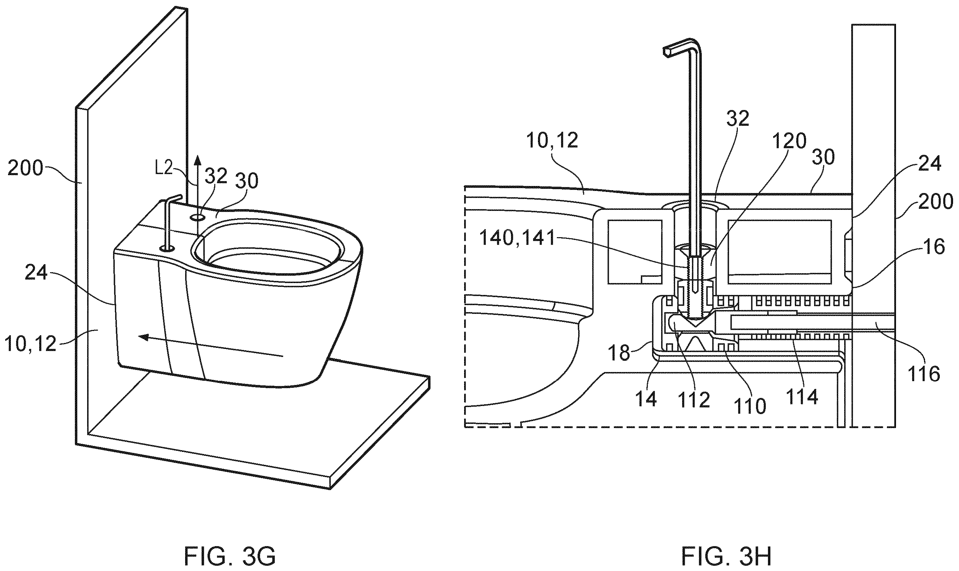

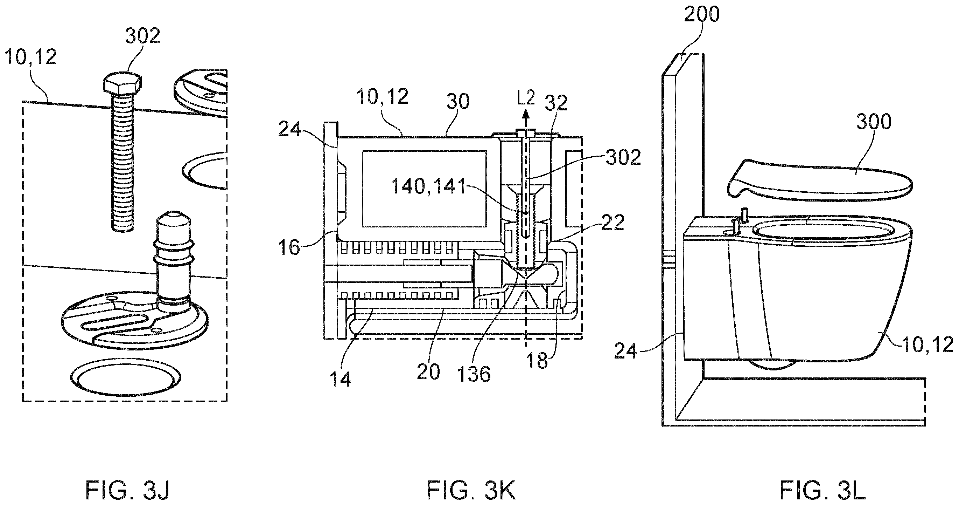

In terms of the geometry of the channel, in accordance with some embodiments such as those shown in the Figures, the first end 16 of each channel 14 may be located on or proximal to a flat surface 24 of the body portion 12, which is a flat surface 24 operable to engage against or face the wall 200 when the sanitary ware apparatus 10 is mounted thereon, as shown best for instance with respect to Figures 3G and 3H.

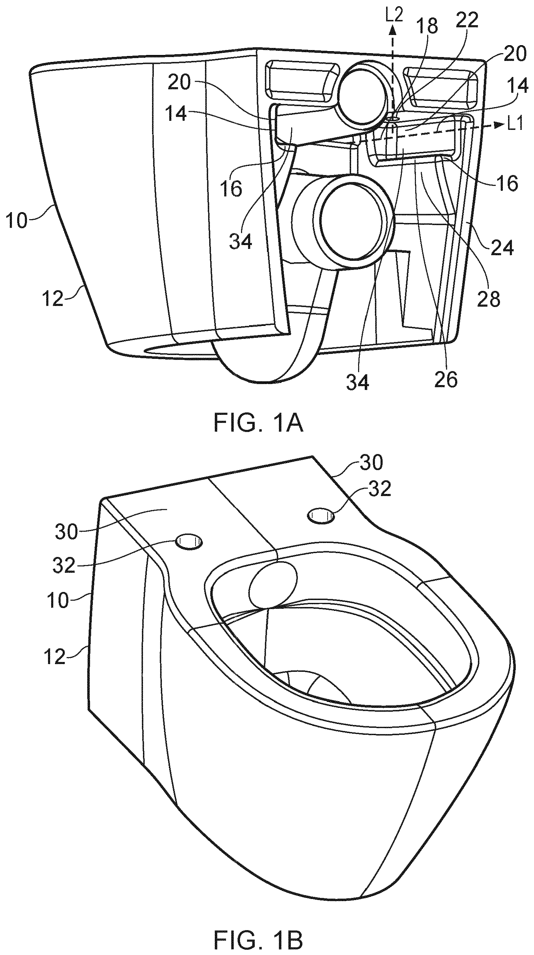

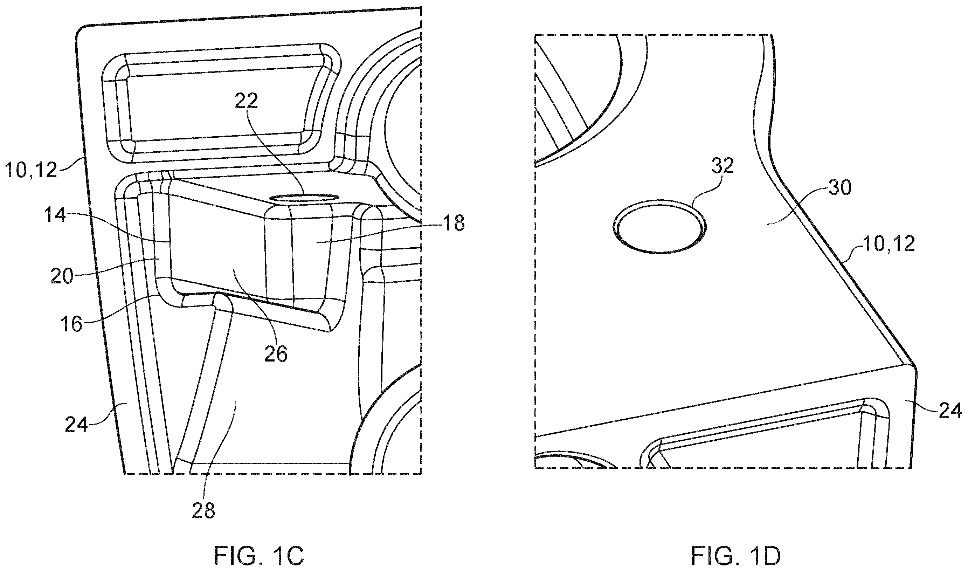

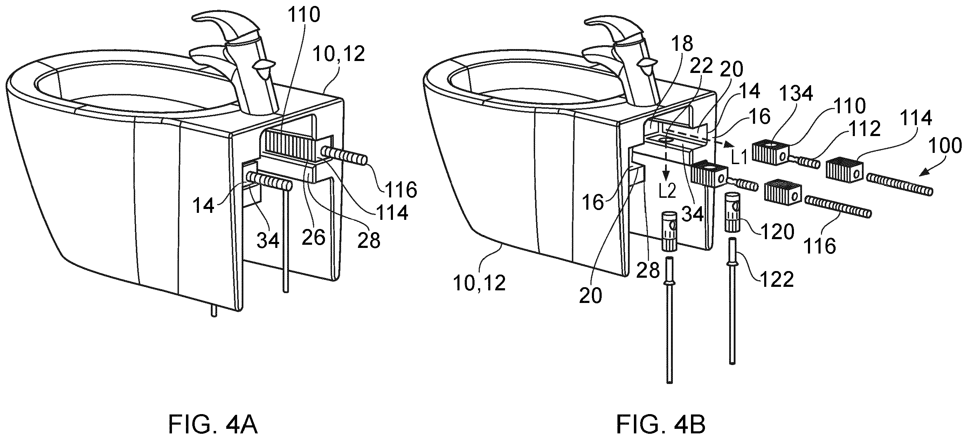

In accordance with some embodiments of the sanitary ware apparatus 10, such as those shown in the Figures - see in particular Figures 1A and 4A, each channel 14 may form a recess 26 within an interior surface 28 of the sanitary ware apparatus 10. In this way, each channel 14 is more concealed from inadvertent access by unwanted foreign objects, and provides for a body portion whose formation can be simplified.

With respect to the second end 18 of each channel 14, this second end 18 is located further from the surface 24 which is engageable against the wall 200, than the first end 16 is located to this surface 24. The second end 18 may be an open end or a closed end - however, to ensure a predetermined travel length for the fastening mechanism 100 inside the channel 14, and to allow for better location of the fastening mechanism 100 inside the channel 14, in accordance with some particular embodiments the second end 18 may be a closed end.

Nominally, each (elongate) channel 14 may extend in a first direction L1 at along the length of the channel, and the opening 22 extend through the channel wall 20 in a second direction L2 along the length of the opening 22, wherein the second direction L2 is different to the first direction L1. In the particular embodiments shown in the Figures, the second direction L2 is perpendicular to the first direction L1.

In the context of the particular embodiments shown in Figures 1A-3L, where the sanitary ware apparatus is a toilet, the second direction L2 extends in an upward direction towards an external surface 30 of the body portion 12, which is an external surface 30 proximal a top of the sanitary ware apparatus 10, and which is configured to face a user, when the sanitary ware apparatus 10 is in use. In such embodiments, and in accordance with other embodiments, the opening 22 is accessible from a hole 32 located on such an external surface 30 of the body portion 12.

With reference to some other embodiments of sanitary ware apparatus, such as those shown in Figures 4A and 4B, the second direction L2 may equally extend in a downward direction such that the opening 22 is accessible from the interior surface 28 of the sanitary ware apparatus 10.

Staying with the structure and geometry of each channel 14, in accordance with some embodiments, the opening 22 may be located more proximal to the second end 18 of the channel than the opening 22 is located to the first end 16 of the channel 14. Also in respect of the channel 14, in accordance with some embodiments, a side 34 of the channel 14 between the first end 16 and the second end 18 may be open, such that the channel wall 20 does not completely surround the channel 14. Such an arrangement is shown best with reference to the embodiments of sanitary ware apparatus 10 shown in Figure 1A and Figure 4B, where the open side 34 of the channel 14 is located in the interior surface 28 of the sanitary ware apparatus 10.

In respect of the cross section for each channel 14, the cross section may be uniform along the length of the channel 14. The shape of the cross section may vary depending on the application of the sanitary ware apparatus. In some particular embodiments, each channel may comprise a non-circular cross section, such as, but not limited to, a rectangular cross section. Such a non-circular cross section is shown, for instance, with reference to the embodiments of sanitary ware apparatus 10 shown in Figures 1A and 4B. In such embodiments, the particular cross-section may then better control the ability of the fastening mechanism 100 to be inserted into channel 14 in a predetermined number of permitted ways, as will be described, such that the likelihood of incorrect insertion of the fastening mechanism 100 into the channel 14 can be reduced.

The number of channels 14 in each sanitary ware apparatus may vary depending on the shape/geometry of the sanitary ware apparatus 10, and the strength of each fastening mechanism 100 (which is received by the channel 14) used to mount the sanitary ware apparatus against a wall 200. In that respect, for a heavier sanitary ware apparatus 10, or in embodiments where it is appropriate to better ensure an even distribution of forces, a plurality of channels 14 may be provided in the sanitary ware apparatus - with a respective fastening mechanism 100 provided for each channel 14. In some particular embodiments therefrom, a first channel 14 might be provided towards a first (e.g. left) side of the sanitary ware apparatus 10, and a second channel 14 provided towards a second (e.g. right) side of the sanitary ware apparatus 10 which is opposite the first side. Such an embodiment is shown with reference to the sanitary ware apparatus shown in Figures 1A-1B and Figures 4A-4B. Equally however, it will be appreciated in other embodiments that the presence of only one channel 14 may well be sufficient.

Moving away from the structure of the sanitary ware apparatus 10, the structure of the fastening mechanism 100 and its operation with the sanitary ware apparatus 100 will now be described.

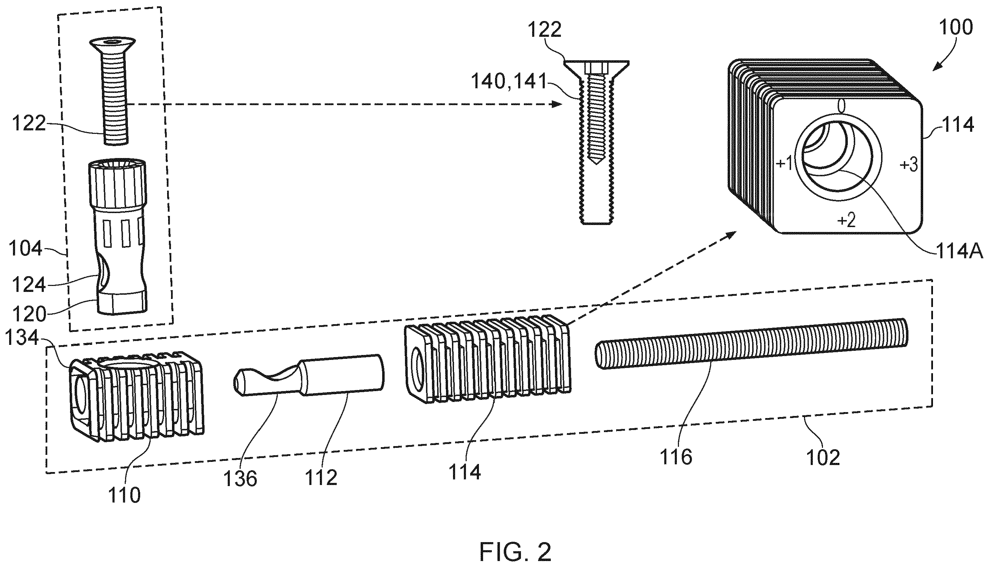

An embodiment of fastening mechanism 100 is shown best with reference to Figure 2. Each fastening mechanism 100 is associated with a respective channel 14, and principally comprises a wall fixing portion 102 and a locking member 104.

As will be described, the wall fixing portion 102 is configured for at least partially inserting in; and for at least partially projecting from; the wall 200 against which the sanitary ware apparatus 10 is to be mounted. In use, the wall fixing portion 102 is operable to be located in the channel 14. The locking member 104 is configured in use to be inserted through the opening 22 of the channel 14, and is configured to extend through the channel wall 20, in such a way that the locking member 104 is configured to engage with the wall fixing portion 102 located in the channel 14 of the sanitary ware apparatus 10 as will be described.

In respect of the wall fixing portion 102, the wall fixing portion 102 comprises a first bushing 110 which, in use, is located inside the channel 14, and further comprises a locking pin 112 which extends through the first bushing 102. In this way, and in use, the locking member 104 may then extend through the channel wall 20 such that it extends into the first bushing 110 and engages with the locking pin 112.

The wall fixing portion 102 is also provided with a second bushing 114 which, in use, is located inside the channel 14, and which the body portion 12 is configured to rest on for supporting the body portion 12. One function of the second bushing 114 may be to better retain the wall fixing portion 102 inside the channel 14. According to the invention, a further function for the second bushing 114 is to act as a levelling mechanism for varying the orientation of the body portion 12 with respect to the wall 200. The second bushing 114 might be locatable in the channel 14 in a plurality of different orientations. This might be achieved, for instance, by virtue of the second bushing 114 defining a second eccentric bushing (i.e. whose hole 114A extending therethrough is offset from the centre of the bushing 114). Such eccentricity is shown for instance in the particular embodiment illustrated in Figure 2, where the second (eccentric) bushing 114 comprises a substantially rectangular cross section. There, the position of the hole 114A extending through the second bushing 114 is such that the four edges of the rectangular cross section are located by different amounts away from the centre of the hole 114A. This is illustrated in the second bushing 114 shown in Figure 2, by the respective markings '0', '+1', '+2' and '+3' for the respective four edges of the rectangular cross section for the second busing 114 (where the '0' edge is closest to the hole 114A, and the '+3' edge is located furthest from the hole 114A). In this way, the provision of the second eccentric bushing 114 and its ability to be locatable in the channel 14 in a plurality of different orientations allows the position of the body portion 14 (which in use of the sanitary ware apparatus will rest on the top surface of each second bushing 114) with respect to the fastening mechanism 100, and thus the wall 200, to be varied.

With reference to the embodiment of fastening mechanism shown in Figure 2, the wall fixing portion 102 comprises a portion 116 which is inserted into the wall 200. This might be, for instance, a threaded bar which is configured to be screwed into the wall 200.

Turning to the locking member 104, the locking member may comprise a third bushing 120 and a fastener 122 engaged inside the third bushing 120, wherein the fastener (in use of the sanitary ware apparatus 10) engages against the locking pin 112. The third bushing 120 is configured, in some embodiments, to expand in an outward direction as a result of the insertion of the fastener 122 therein. In this way, the third bushing 120 is pressed into engagement with the body portion 12 by the fastener 122.

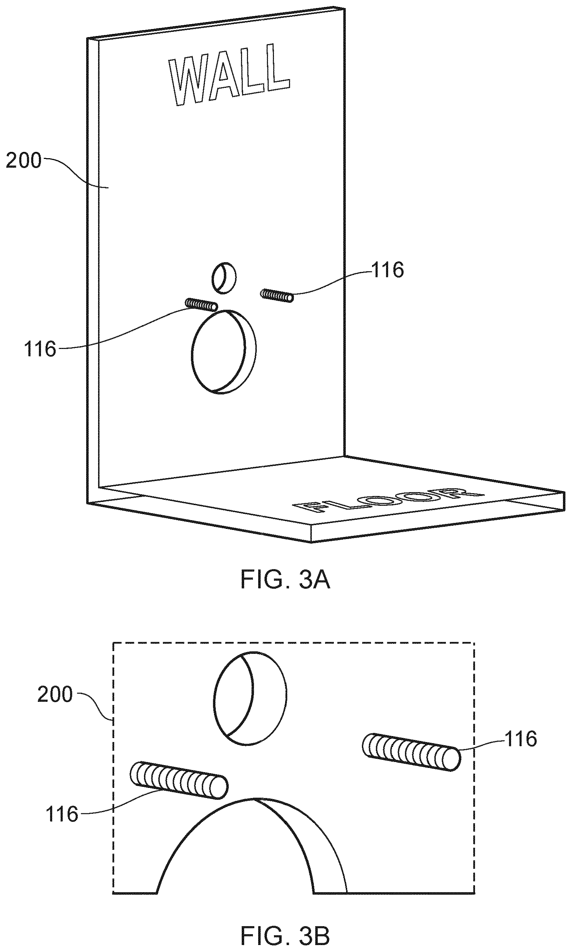

In terms of how the sanitary ware apparatus 10 may be mounted to the wall 200 using the fastening mechanisms 100 described herein, a description of this mounting process will now be described with reference to an embodiment of sanitary ware apparatus 10 as shown in Figures 3A-3L.

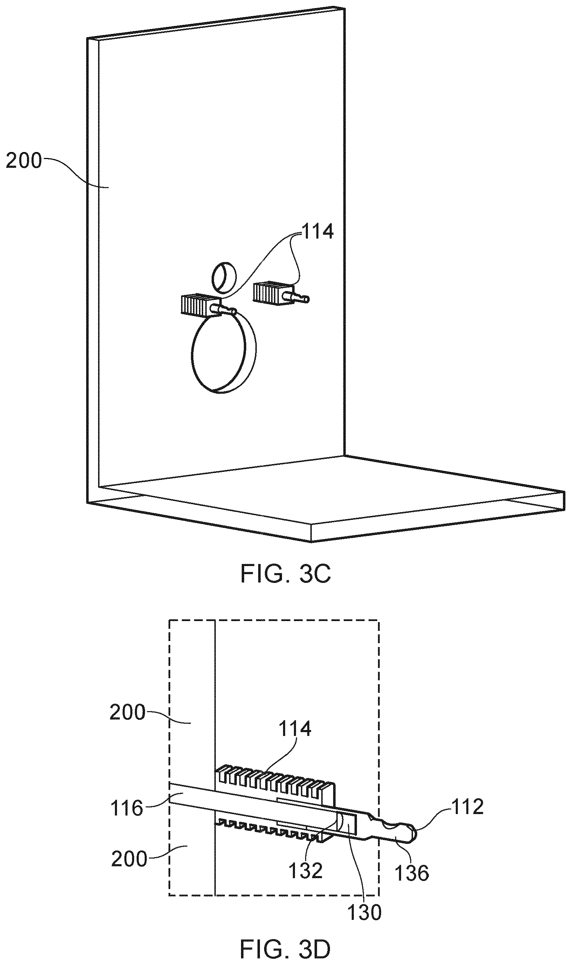

Beginning with Figures 3A and 3B, the portion 116 of each wall fixing portion 102 is inserted into the wall 200 at the appropriate approximate locations. Moving to Figures 3C and 3D, the second bushing 114 is then located around the portion 116, i.e. with portion 116 extending through the hole 114A of the second bushing 114. At this point, since the second bushing 114 acts as the levelling mechanism, a spirit level or some other appropriate device may be passed along the top of the second bushing (where only one second bushing/fastening mechanism is present), or across all the second bushings 114 (where more than one second bushing 114/fastening mechanism is present) to ensure that the body portion 12, when resting on each second bushing 114, will be orientated correctly. Where this is deemed not be to the case, the orientation of each second bushing 114 can be varied as required such to ameliorate for the incorrect orientation (e.g. in the particular embodiment shown in the Figures by rotating one of the second bushings 114, such that a different one of the respective '0', '+1', '+2' and '+3' edges from the bushing 114 becomes the topmost edge).

Once each second bushing has been installed around the portion 116 (at the most appropriate orientation), the locking pin 112 may be connected to the portion 116. In one very particular embodiment, for instance, this might connection be achieved by way of a recess 130 in an end of the locking pin 112 engaging with a corresponding projection/end 132 of the portion 116.

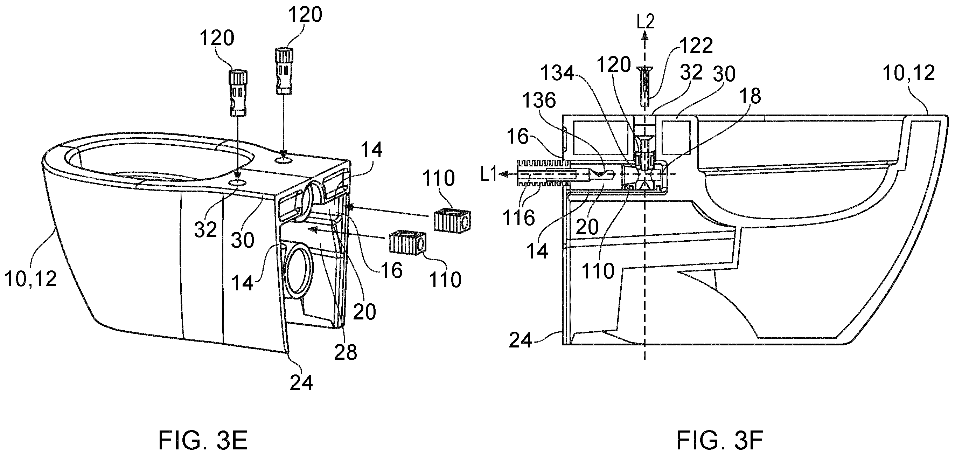

From the above position, moving to Figure 3E and the body portion 12 of the sanitary ware apparatus 10, the first bushing 110 is then inserted from the first end 16 of the channel 14 into the channel 14 towards the second end 18. The third bushing 120 portion of the fastening mechanism 100 is then passed into the body portion 12 (for instance through the hole 32), and through the channel wall 20, and into the first bushing 110, for instance via a hole 134 from the first bushing 110 which is configured to align with the opening 22.

With the third bushing 120 positioned in the first bushing 110 (as shown in Figure 3F), the body portion 12 can then be positioned over, and onto the remaining portions of the wall fixing portion 102, such as the second bushing 114 and the portion 116 which is inserted into the wall 200, as shown for instance with respect to Figures 3F and 3G. In that respect, the body portion 12 is manoeuvred such that the locking pin 112 is passed into the first bushing 110 and through the through-hole 124 of the third bushing 120 (which are installed in the channel 14 of the body portion 12). From there, the body portion 12 then rests on the second bushing 114, as shown in Figure 3H.

From the above position, where the locking pin 112 is held within the first bushing 110, to prevent the locking pin 112 from moving, the fastener 122 may be then engaged inside the third bushing 120, and engaged against the locking pin 112 by friction. In some particular embodiments, the locking pin 112 may be provided with a recess 136 in which the fastener 122 is configured to engage with, such to further improve the retention of the locking pin 112 inside the channel 14.

Thus, described above is a method of mounting a sanitary ware apparatus against the wall 200 using a fastening mechanism 100.

With reference to the particular embodiments shown in Figures 4A and 4B, which show a sanitary ware apparatus 10 in the form of a bidet, a similar mounting process for mounting the apparatus 10 against a wall 200 may be used to that described in Figures 3A-3H. The difference with respect to the embodiment of apparatus 10 shown in Figures 4A and 4B is the channel 22 and the second direction L2 extend in a downward direction such that the opening 22 is accessible from the interior surface 28 of the sanitary ware apparatus 10. In such embodiments therefore, rather than the third bushing 120 portion of the fastening mechanism 100 being passed through a hole 32 located on an external surface 30 of the body portion 12, the third bushing 120 may instead be inserted through the opening 22 via the interior surface 28 of the sanitary ware apparatus 10, as shown in Figures 4A and 4B.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims, and that other embodiments may be utilised and modifications may be made without departing from the scope of the claimed invention.

In that respect for instance, it will be appreciated that the apparatuses described herein, which have been described in some embodiments as being with reference to a toilet or a bidet, may be used on any sanitary ware apparatus/product intended for mounting against a wall.

Furthermore, with respect to each of the bushings described herein, it will be appreciated that at least one, some, or all of these bushings may be resilient such to provide for an element of improved sealing in the channel 14 or the opening 22 noting the humid conditions in which a sanitary ware apparatus 10 may often be used in.

It will also be appreciated that in some embodiments of the sanitary ware apparatus 10, such as those shown in Figures 3J-3L, the locking member 104 may comprise at least one attachment portion 140, such as a threaded portion 141, which might in some particular embodiments be an internal thread portion 141, for attaching a toilet seat 300 to the sanitary ware apparatus 10. In the particular embodiments shown in Figures 3J-3L, the internal threaded portion 141 is located inside the fastener 122, such that a threaded component 302 which is connected to the toilet seat 300 can be engaged with the fastening mechanism 100 (in particular the threaded portion 141). In such embodiments, the attachment portion 140 thus obviates the need for a completely different attachment mechanism for attaching any such toilet seat 300 to the sanitary ware apparatus 10. In principle, this may then serve to reduce the complexity of the body portion 12 by it not then necessarily needing a separate mounting point for the toilet seat 300.

In respect of the material and manufacture of the sanitary ware apparatus and its body portion, it will be appreciated that these may depend on the given intended application for the sanitary ware apparatus. However, the above fastening mechanism 100 described herein is particularly suited for allowing for a sanitary ware apparatus 100 comprising a body portion which is formed as a unitary component. That being the case, the fastening mechanism is also particularly suited for use with for a sanitary ware apparatus 100 comprising a body portion 12 which is made of ceramic (owing to the fact that body portion 12 can then be formed as a unitary component).

Finally, with respect to the levelling mechanism described herein, it will also be appreciated that this might be used as part of a sanitary ware apparatus 10 comprising a body portion 12 which may, or may not, have any respective channel(s) 14 on it. In embodiments not covered by the claims, where the channel(s) 14 are not present on the body portion 12, another part of the body portion 14 may be configured to rest on a portion of the levelling mechanism (e.g. any eccentric bushing 114 therefrom).

## Claims

1. A sanitary ware apparatus (10) for mounting against a wall (200), wherein the apparatus (10) comprises a body portion (12) comprising at least one channel (14) for receiving a fastening mechanism (100) for mounting the sanitary ware apparatus (10) against a wall (200), wherein each channel (14) comprises a first, open, end (16) and a second end (18) opposite the first end (16), wherein each channel (14) is at least partially surrounded by a channel wall (20) extending between the first end (16) and the second end (18), wherein the channel wall (20) comprises an opening (22) extending therethrough, wherein the opening (22) is located between the first end (16) and the second end (18) of the channel (14), and wherein the opening (22) is for receiving a portion of the fastening mechanism (100),
wherein the sanitary ware apparatus (10) further comprises the fastening mechanism (100), and
wherein the fastening mechanism (100) comprises, for each channel (14):
a wall fixing portion (102) for at least partially inserting in, and for at least partially projecting from, the wall (200), wherein the wall fixing portion (102) is locatable in the channel (14); and
a locking member (104) configured to be inserted through the opening (22) of the channel (14), and extendable through the channel wall (20), wherein the locking member (104) is configured to be engaged with the wall fixing portion (102) when the wall fixing portion (102) is located in the channel (14),
wherein the wall fixing portion (102) comprises a first bushing (110) which is locatable inside the channel (14), and further comprises a locking pin (112) which is configured to extend through the first bushing (110), wherein the locking member (104) which is configured to extend through the channel wall (20) is configured to extend into the first bushing (110) and engage with the locking pin (112),
wherein the wall fixing portion (102) comprises a second bushing (114) which is locatable inside the channel (14), and which the body portion (12) is configured to rest on for supporting the body portion (12), and
wherein the wall fixing portion (102) comprises a levelling mechanism comprising the second bushing (114), the levelling mechanism for varying the orientation of the body portion (12) with respect to the wall (200) and wherein the second bushing (114) is locatable in the channel (14) in a plurality of different orientations.

2. The sanitary ware apparatus according to claim 1, wherein the first end (16) of each channel (14) is located on a flat surface (24) of the body portion (12), wherein the flat surface (24) is operable to face against the wall (200).

3. The sanitary ware apparatus according to any preceding claim, wherein each channel (14) extends in a first direction (L1), and the opening (22) extends in a second direction (L2) which is substantially perpendicular to the first direction (L1).

4. The sanitary ware apparatus according to any preceding claim, wherein the opening (22) is located more proximal to the second end (18) of the channel (14) than the opening (22) is located to the first end (16) of the channel (14).

5. The sanitary apparatus ware according to any preceding claim, wherein each channel (14) forms a recess (26) within an interior surface (28) of the sanitary ware apparatus (10).

6. The sanitary ware apparatus according to any preceding claim, wherein a side (34) of the channel (14) between the first end (16) and the second end (18) is open, such that the channel wall (20) does not completely surround the channel (14).

7. The sanitary ware apparatus according to any preceding claim, wherein the opening (22) is accessible from a hole (32) located on an external surface (30) of the body portion (12).

8. The sanitary ware apparatus according to claim 1, wherein the locking member (104) comprises a third bushing (120) and a fastener (122) engageable inside the third bushing (120), wherein the fastener (122) is configured to engage against the locking pin (112).

9. The sanitary ware apparatus according to claim 8, wherein the third bushing (120) is configured to be pressed into engagement with the body portion (12) by the fastener (122).

10. The sanitary ware apparatus according to claim 1, wherein the locking member (104) comprises at least one threaded portion (141) for attaching a toilet seat (300) to the sanitary ware apparatus (10).

11. The sanitary ware apparatus according to any preceding claim, wherein the at least one channel (14) comprises a plurality of channels (14).

12. The sanitary ware apparatus according to any preceding claim, wherein the body portion (12) is formed as a unitary component.

## Patentansprüche

1. Sanitärausstattungsvorrichtung (10) zum Montieren an einer Wand (200), wobei die Vorrichtung (10) einen Körperabschnitt (12) umfasst, der mindestens einen Kanal (14) zur Aufnahme eines Befestigungsmechanismus (100) zum Montieren der Sanitärausstattungsvorrichtung (10) an einer Wand (200) umfasst, wobei jeder Kanal (14) ein erstes, offenes Ende (16) und ein dem ersten Ende (16) gegenüberliegendes zweites Ende (18) umfasst, wobei jeder Kanal (14) mindestens teilweise von einer Kanalwand (20) umgeben ist, die sich zwischen dem ersten Ende (16) und dem zweiten Ende (18) erstreckt, wobei die Kanalwand (20) eine sich durch diese erstreckende Öffnung (22) umfasst, wobei die Öffnung (22) zwischen dem ersten Ende (16) und dem zweiten Ende (18) des Kanals (14) angeordnet ist und wobei die Öffnung (22) der Aufnahme eines Abschnitts des Befestigungsmechanismus (100) dient,
wobei die Sanitärausstattungsvorrichtung (10) ferner den Befestigungsmechanismus (100) umfasst und
wobei der Befestigungsmechanismus (100) für jeden Kanal (14) Folgendes umfasst:
einen Wandfixierungsabschnitt (102), der mindestens teilweise in die Wand (200) eingeführt ist und mindestens teilweise daraus vorsteht, wobei der Wandfixierungsabschnitt (102) in dem Kanal (14) angeordnet werden kann, und
ein Verriegelungsglied (104), das zum Einführen durch die Öffnung (22) des Kanals (14) ausgestaltet ist und sich durch die Kanalwand (20) erstrecken kann, wobei das Verriegelungsglied (104) dazu ausgestaltet ist, mit dem Wandfixierungsabschnitt (102) in Eingriff gebracht zu werden, wenn der Wandfixierungsabschnitt (102) in dem Kanal (14) angeordnet ist,
wobei der Wandfixierungsabschnitt (102) eine erste Buchse (110) umfasst, die in dem Kanal (14) positionierbar ist, und ferner einen Verriegelungsstift (112) umfasst, der dazu ausgestaltet ist, sich durch die erste Buchse (110) zu erstrecken, wobei das Verriegelungsglied (104), das dazu ausgestaltet ist, sich durch die Kanalwand (20) zu erstrecken, dazu ausgestaltet ist, sich in die erste Buchse (110) zu erstrecken und mit dem Verriegelungsstift (112) in Eingriff zu kommen,
wobei der Wandfixierungsabschnitt (102) eine zweite Buchse (114) umfasst, die in dem Kanal (14) positionierbar ist, und wobei der Körperabschnitt (12) dazu ausgestaltet ist, zum Stützen des Körperabschnitts (12) auf dieser zu ruhen, und
wobei der Wandfixierungsabschnitt (102) einen Nivelliermechanismus umfasst, der die zweite Buchse (114) umfasst, wobei der Nivelliermechanismus zum Variieren der Ausrichtung des Körperabschnitts (12) in Bezug auf die Wand (200) dient und wobei die zweite Buchse (114) in dem Kanal (14) in einer Vielzahl von unterschiedlichen Ausrichtungen positionierbar ist.

2. Sanitärausstattungsvorrichtung nach Anspruch 1, wobei das erste Ende (16) jedes Kanals (14) auf einer flachen Fläche (24) des Körperabschnitts (12) angeordnet ist, wobei die flache Fläche (24) dazu dient, gegen die Wand (200) gewandt zu sein.

3. Sanitärausstattungsvorrichtung nach einem der vorhergehenden Ansprüche, wobei sich jeder Kanal (14) in einer ersten Richtung (L1) erstreckt und sich die Öffnung (22) in einer zweiten Richtung (L2) erstreckt, die im Wesentlichen senkrecht zu der ersten Richtung (L1) verläuft.

4. Sanitärausstattungsvorrichtung nach einem der vorhergehenden Ansprüche, wobei die Öffnung (22) proximaler in Bezug auf das zweite Ende (18) des Kanals (14) angeordnet ist als die Öffnung (22) in Bezug zu dem ersten Ende (16) des Kanals (14) angeordnet ist.

5. Sanitärausstattungsvorrichtung nach einem der vorhergehenden Ansprüche, wobei jeder Kanal (14) eine Aussparung (26) in einer Innenfläche (28) der Sanitärausstattungsvorrichtung (10) bildet.

6. Sanitärausstattungsvorrichtung nach einem der vorhergehenden Ansprüche, wobei eine Seite (34) des Kanals (14) zwischen dem ersten Ende (16) und dem zweiten Ende (18) offen ist, so dass die Kanalwand (20) den Kanal (14) nicht vollständig umgibt.

7. Sanitärausstattungsvorrichtung nach einem der vorhergehenden Ansprüche, wobei die Öffnung (22) von einem Loch (32) aus zugänglich ist, das an einer Außenfläche (30) des Körperabschnitts (12) angeordnet ist.

8. Sanitärausstattungsvorrichtung nach Anspruch 1, wobei das Verriegelungsglied (104) eine dritte Buchse (120) und ein Befestigungsglied (122) umfasst, das in der dritten Buchse (120) in Eingriff bringbar ist, wobei das Befestigungsglied (122) dazu ausgestaltet ist, gegen den Verriegelungsstift (112) in Eingriff zu kommen.

9. Sanitärausstattungsvorrichtung nach Anspruch 8, wobei die dritte Buchse (120) dazu ausgestaltet ist, durch das Befestigungsglied (122) in Eingriff mit dem Körperabschnitt (12) gedrückt zu werden.

10. Sanitärausstattungsvorrichtung nach Anspruch 1, wobei das Verriegelungsglied (104) mindestens einen Gewindeabschnitt (141) zum Anbringen eines Toilettensitzes (300) an der Sanitärausstattungsvorrichtung (10) umfasst.

11. Sanitärausstattungsvorrichtung nach einem der vorhergehenden Ansprüche, wobei der mindestens eine Kanal (14) eine Vielzahl von Kanälen (14) umfasst.

12. Sanitärausstattungsvorrichtung nach einem der vorhergehenden Ansprüche, wobei der Körperabschnitt (12) als eine einteilige Komponente ausgebildet ist.

## Revendications

1. Appareil sanitaire (10) destiné à être monté contre un mur (200), l'appareil (10) comprenant une partie corps (12) comprenant au moins un canal (14) destiné à recevoir un mécanisme de fixation (100) pour monter l'appareil sanitaire (10) contre un mur (200), chaque canal (14) comprenant une première extrémité (16) ouverte et une seconde extrémité (18) opposée à la première extrémité (16), chaque canal (14) étant au moins partiellement entouré par une paroi de canal (20) s'étendant entre la première extrémité (16) et la seconde extrémité (18), la paroi de canal (20) comprenant une ouverture (22) s'étendant à travers celle-ci, l'ouverture (22) étant située entre la première extrémité (16) et la seconde extrémité (18) du canal (14), et l'ouverture (22) servant à recevoir une partie du mécanisme de fixation (100),
l'appareil sanitaire (10) comprenant en outre le mécanisme de fixation (100), et
le mécanisme de fixation (100) comprenant pour chaque canal (14) :
une partie de fixation au mur (102) destinée à être insérée au moins partiellement dans le mur (200) et à faire saillie au moins partiellement de celui-ci, la partie de fixation au mur (102) pouvant être positionnée dans le canal (14) ; et
un élément de verrouillage (104) conçu pour être inséré à travers l'ouverture (22) du canal (14), et pouvant s'étendre à travers la paroi de canal (20), l'élément de verrouillage (104) étant conçu pour être en prise avec la partie de fixation au mur (102) lorsque la partie de fixation au mur (102) est située dans le canal (14),
la partie de fixation au mur (102) comprenant une première douille (110) qui peut être positionnée à l'intérieur du canal (14) et comprenant en outre une goupille de verrouillage (112) qui est conçue pour s'étendre à travers la première douille (110), l'élément de verrouillage (104) qui est conçu pour s'étendre à travers le mur du canal (20) étant conçu pour s'étendre dans la première douille (110) et venir en prise avec la goupille de verrouillage (112),
la partie de fixation au mur (102) comprenant une deuxième douille (114) qui peut être positionnée à l'intérieur du canal (14), et sur laquelle la partie corps (12) est conçue pour reposer afin de supporter la partie corps (12), et
la partie de fixation au mur (102) comprenant un mécanisme de nivellement comprenant la deuxième douille (114), le mécanisme de nivellement faisant varier l'orientation de la partie corps (12) par rapport au mur (200) et la deuxième douille (114) pouvant être positionnée dans le canal (14) dans une pluralité d'orientations différentes.

2. Appareil sanitaire selon la revendication 1, la première extrémité (16) de chaque canal (14) étant située sur une surface plate (24) de la partie corps (12), la surface plate (24) pouvant être actionnée pour faire face au mur (200).

3. Appareil sanitaire selon l'une quelconque des revendications précédentes, chaque canal (14) s'étendant dans une première direction (L1), et l'ouverture (22) s'étendant dans une seconde direction (L2) qui est sensiblement perpendiculaire à la première direction (L1).

4. Appareil sanitaire selon l'une quelconque des revendications précédentes, l'ouverture (22) étant située plus près de la seconde extrémité (18) du canal (14) que l'ouverture (22) n'est située par rapport à la première extrémité (16) du canal (14).

5. Appareil sanitaire selon l'une quelconque des revendications précédentes, chaque canal (14) formant un évidement (26) à l'intérieur d'une surface intérieure (28) de l'appareil sanitaire (10).

6. Appareil sanitaire selon l'une quelconque des revendications précédentes, un côté (34) du canal (14) entre la première extrémité (16) et la seconde extrémité (18) étant ouvert, de sorte que la paroi de canal (20) n'entoure pas complètement le canal (14).

7. Appareil sanitaire selon l'une quelconque des revendications précédentes, l'ouverture (22) étant accessible à partir d'un trou (32) situé sur une surface externe (30) de la partie corps (12).

8. Appareil sanitaire selon la revendication 1, l'élément de verrouillage (104) comprenant une troisième douille (120) et un élément de fixation (122) pouvant venir en prise à l'intérieur de la troisième douille (120), l'élément de fixation (122) étant conçu pour venir en prise contre la goupille de verrouillage (112).

9. Appareil sanitaire selon la revendication 8, la troisième douille (120) étant conçue pour être pressée en prise avec la partie corps (12) par l'élément de fixation (122).

10. Appareil sanitaire selon la revendication 1, l'élément de verrouillage (104) comprenant au moins une partie filetée (141) pour fixer un siège de toilette (300) à l'appareil sanitaire (10).

11. Appareil sanitaire selon l'une quelconque des revendications précédentes, l'au moins un canal (14) comprenant une pluralité de canaux (14).

12. Appareil sanitaire selon l'une quelconque des revendications précédentes, la partie corps (12) étant formée comme un composant unitaire.
